(19) Europäisches Patentamt
European Patent Office
Office européen des brevets

(11) **EP 3 759 472 B1**

(12) **EUROPÄISCHE PATENTSCHRIFT**

(45) Veröffentlichungstag und Bekanntmachung des Hinweises auf die Patenterteilung:
**18.01.2023 Patentblatt 2023/03**

(21) Anmeldenummer: **19704342.5**

(22) Anmeldetag: **18.02.2019**

(51) Internationale Patentklassifikation (IPC):
**G01N 27/04** *(2006.01)* **A61L 15/60** *(2006.01)*

(52) Gemeinsame Patentklassifikation (CPC):
**G01N 27/043**

(86) Internationale Anmeldenummer:
**PCT/EP2019/053928**

(87) Internationale Veröffentlichungsnummer:
**WO 2019/162216 (29.08.2019 Gazette 2019/35)**

(54) **VERFAHREN ZUR MESSUNG DER PERMEABILITÄT VON SUPERABSORBERN**

METHOD FOR MEASURING THE PERMEABILITY OF SUPERABSORBERS

PROCÉDÉ DE MESURE DE LA PERMÉABILITÉ D'UN SUPERABSORBANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2018 EP 18158661**

(43) Veröffentlichungstag der Anmeldung:
**06.01.2021 Patentblatt 2021/01**

(73) Patentinhaber: **BASF SE**
**67056 Ludwigshafen am Rhein (DE)**

(72) Erfinder:
• **TOENNESSEN, Markus**
**67056 Ludwigshafen (DE)**
• **HAEFNER, Marc**
**67056 Ludwigshafen (DE)**
• **KRAEMER, Karsten**
**67056 Ludwigshafen (DE)**
• **BAUDUIN, Christophe**
**67056 Ludwigshafen (DE)**
• **DANIEL, Thomas**
**67056 Ludwigshafen (DE)**

(74) Vertreter: **BASF IP Association**
**BASF SE**
**GBI-C006**
**67056 Ludwigshafen (DE)**

(56) Entgegenhaltungen:
**EP-A1- 0 640 330 DE-A1- 3 831 272**

• **SHU-XIN ZHANG ET AL: "Determination of the swelling behavior of superabsorbent polymers by a tracer-assisted on-line spectroscopic measurement", POLYMER TESTING, Bd. 62, 2. September 2017 (2017-09-02), Seiten 110-114, XP055579970, AMSTERDAM, NL ISSN: 0142-9418, DOI: 10.1016/j.polymertesting.2017.06.020**
• **TOYOICHI TANAKA AND DAVID J FILLMORE: "Kinetics of swelling of gels", JOURNAL OF CHEMICAL PHY, AMERICAN INSTITUTE OF PHYSICS, US, Bd. 70, Nr. 3, 2. Februar 1979 (1979-02-02), Seiten 1214-1218, XP009145960, ISSN: 0021-9606, DOI: 10.1063/1.437602**

**Beschreibung**

Die vorliegende Erfindung betrifft ein Verfahren zur Messung von Kenngrößen bei Superabsorbern, wobei die Kenngröße mittels einer vorher gemessenen Korrelation zwischen Quellkonstante k und Kenngröße oder charakteristischer Quellzeit $\tau$ und Kenngröße ermittelt wird.

Superabsorber werden zur Herstellung von Windeln, Tampons, Damenbinden und anderen Hygieneartikeln, aber auch als wasserzurückhaltende Mittel im landwirtschaftlichen Gartenbau verwendet. Die Superabsorber werden auch als wasserabsorbierende Polymere bezeichnet.

Die Herstellung von Superabsorbern wird in der Monographie "Modern Superabsorbent Polymer Technology", F.L. Buchholz und A.T. Graham, Wiley-VCH, 1998, Seiten 71 bis 103, beschrieben.

DE 38 31 272 A1 offenbart ein Verfahren zur Messung der Absorptionsgeschwindigkeit mittels Leitfähigkeitsmessung.

ChemKon (Chemie konkret), Band 20, Jahrgang 2013, Seiten 127 bis 130 beschreibt die Messung der Quellungskinetik bei Superabsorbern mittels Extinktionsmessung unter Verwendung von Dextranblau. Polymer Testing, Band 62, Jahrgang 2017, Seiten 110 bis 114 beschreibt ein sehr ähnliches Verfahren.

Aufgabe der vorliegenden Erfindung war die Bereitstellung eines verbesserten Verfahren zur Messung von Kenngrößen bei Superabsorbern. Das Verfahren sollte sich insbesondere zur automatisierten Routineanalytik bei der kontinuierlichen Herstellung von Superabsorbern eignen.

Gelöst wurde die Aufgabe durch ein Verfahren zur Messung von Kenngrößen bei Superabsorbern, wobei überschüssige wässrige Lösung oder Dispersion vorgelegt wird, der Superabsorber in der vorgelegten wässrigen Lösung oder Dispersion unter Rühren gequollen wird, in der wässrigen Lösung oder Dispersion mindestens eine Komponente A gelöst oder dispergiert ist und die Anreicherung der mindestens einem Komponente A in der wässrigen Lösung oder Dispersion während des Quellens des Superabsorbers gemessen wird, dadurch gekennzeichnet, dass über die Anreicherung der mindestens einen Komponente A in der wässrigen Lösung oder Dispersion das zeitabhängige Quellverhalten gemessen und daraus die Quellkonstante k oder die charakteristische Quellzeit $\tau$ berechnet wird, die Kenngröße von der Permeabilität des Superabsorbers abhängt und die Kenngröße mittels einer vorher gemessenen Korrelation zwischen Quellkonstante k und Kenngröße oder charakteristischer Quellzeit $\tau$ und Kenngröße ermittelt wird.

In einer bevorzugten Ausführungsform ist die Komponente A ein lösliches Salz, beispielsweise Natriumchlorid, und die Anreicherung der Komponente A wird über den Anstieg der elektrischen Leitfähigkeit der Lösung gemessen.

In einer weiteren bevorzugten Ausführungsform ist die Komponente A ein löslicher Farbstoff, beispielsweise Dextranblau, und die Anreicherung der Komponente A wird über den Anstieg der Lichtabsorption der Lösung gemessen.

In einer weiteren bevorzugten Ausführungsform ist die Komponente A ein dispergierter, optional farbiger Feststoff. Der Feststoff kann organisch oder anorganisch sein, sollte dispergierbar aber nicht löslich in der Meßlösung sein. Beispielsweise können sehr feine Polystyrolpartikel in wäßriger Lösung unter Bildung einer milchigen Phase dispergiert werden. Die Anreicherung der Komponente A wird über den Anstieg der Lichtabsorption oder der Lichtstreuung der Lösung gemessen.

In einer weiteren bevorzugten Ausführungsform ist die Komponente A eine dispergierte, optional farbige Flüssigkeit. Die Flüssigkeit kann organisch oder anorganisch sein, sollte dispergierbar aber nicht löslich in der Meßlösung sein. Die Anreicherung der Komponente A wird über den Anstieg der Lichtabsorption oder der Lichtstreuung der Lösung gemessen.

Die gelöste oder dispergierte Komponente A sollte in Abwesenheit des zugegebenen Superabsorbers über die normale Meßzeit ein stabiles detektierbares Signal liefern.

Die Detektion der Komponente A kann dabei über jedes geeignete physikalische Verfahren erfolgen, bevorzugt sind einfach und kostengünstig durchführbare Meßverfahren, die auf den Eigenschaften der Komponente A hinsichtlich elektrischer Leitfähigkeit, Lichtabsorption, Lichtstreuung, elektrischer Polarisierbarkeit oder Magnetismus beruhen.

Erfindungsgemäß besonders bevorzugt sind Lichtabsorption und Lichtstreuung. Für die Bestimmung dieser Eigenschaften kann monochromatisches, di- oder polychromatisches Licht verwendet werden. Optional kann das Licht polarisiert sein. Die Verwendung polarisierten oder di- bzw. polychromatischen Lichts ist besonders vorteilhaft, wenn die Lichtabsorption neben der Lichtstreuung gemessen werden soll, um die Konzentration der Komponente A zu bestimmen.

Bei einer Messung der Lichtabsorption kann die gleichzeitige unerwünschte Anwesenheit von Streuzentren in der Lösung (z.B. sich ablösende anorganische Partikel von der Superabsorberoberfläche) die Messung stören und eine aufwändige Filtration vor der Messung erforderlich machen. Durch separate Erfassung des wellenlängenabhängigen Streulichtanteils kann auf eine derartige Filtration verzichtet werden und der Streulichteffekt auf die Messung der Lichtabsorption beispielsweise rechnerisch berücksichtigt werden. Dies kann vorteilhaft auch durch Verwendung polarisierten Lichts erreicht werden. Optional kann die Polarisierung dazu zeitlich getaktet werden, um das Signal besonders gut zu erfassen. Bei einer derartigen Entstörung des Meßsignals ist es notwendig die Beiträge von Lichtabsorption und Lichtstreuung beim Durchgang durch das Meßmedium getrennt zu erfassen, um die Komponente A zuverlässig bestimmen zu können.

Es ist auch möglich die Anteile der Lichtabsorption und der Lichtstreuung bei unterschiedlichen Wellenlängen des eingestrahlten Lichts zu erfassen.

Bei Verwendung einer dispergierten Komponente A kann statt der Lichtabsorption die Lichtstreuung zur Messung verwendet werden. Diese Form der Messung kann vorteilhaft sein, da es viele geeignete dispergierbare Feststoffe oder Flüssigkeiten gibt, die ebenfalls nicht in den quellenden Superabsorber eindringen und daher in der Meßdispersion angereichert werden können.

Geeignet ist jede bekannte Lichtquelle, optional mit Farb- und/oder Polarisationsfilter. Besonders geeignete Lichtquellen sind Leuchtdioden und Laser, die bestimmte Wellenlängen erzeugen können. Die Meßwellenlänge kann im sichtbaren Bereich liegen, kann aber auch im unsichtbaren Bereich liegen sofern das Lösungs- oder Dispergiermittel der Meßlösung oder-dispersion eine ausreichende Transparenz für diese Wellenlänge hat.

Die Menge an eingesetzter wässriger Lösung oder Dispersion beträgt vorzugsweise von 2 bis 400 ml, besonders bevorzugt von 5 bis 300 ml, ganz besonders bevorzugt von 10 bis 200 ml.

Die Menge an eingesetztem Superabsorber beträgt vorzugsweise von 0,1 bis 20 g, besonders bevorzugt von 0,2 bis 10 g, ganz besonders bevorzugt von 0,5 bis 5 g.

Der Quotient aus Menge an eingesetzter wässriger Lösung oder Dispersion und Gesamtquellvermögens des eingesetzten Superabsorbers in der wässrigen Lösung oder Dispersion liegt vorzugsweise im Bereich von 1,5 bis 20, besonders bevorzugt im Bereich von 2 bis 10, ganz besonders bevorzugt im Bereich von 2,5 bis 5. Das Gesamtquellvermögen ist die maximale Flüssigkeitsaufnahme durch den Superabsorber aus der wässrigen Lösung oder Dispersion.

Die Komponente A wird idealerweise nicht vom Superabsorber aufgenommen und verbleibt in der Lösung oder Dispersion. Die Flüssigkeitsaufnahme des Superabsorbers kann über den Anstieg der Konzentration der Komponente A in der verbleibenden Lösung oder Dispersion gemäß $Q(t) = V_{LSM} - \frac{m_A}{c(t)}$ berechnet werden, wobei Q(t) die Flüssigkeitsaufnahme des Superabsorbers zum Zeitpunkt t, $V_{LSM}$ das Volumen des eingesetzte Lösungsmittels, $m_A$ die Masse an gelöster Komponente A und c(t) die Konzentration der Komponente A in der Lösung oder Dispersion zum Zeitpunkt t ist. Die Auswertung kann auch mittels eines Computerprogramms erfolgen.

Bei Verwendung einer 0,9 gew.-%igen Kochsalzlösung entspricht die Flüssigkeitsaufnahme nach 0,5 Stunden ungefähr der Zentrifugenretentionskapazität (CRC) gemäß der von der EDANA empfohlenen Testmethode Nr. WSP 241.2 (05) "Fluid Retention Capacity in Saline, After Centrifugation".

Die Quellkonstante k bzw. die charakteristische Quellzeit $\tau$ können aus dem zeitabhängigen-Quellverhalten gemäß $Q(t) = Q_{max} \times (1 - e^{-kt})$ bzw. $Q(t) = Q_{max} \times (1 - e^{-t/\tau})$ berechnet werden, wobei Q(t) die Flüssigkeitsaufnahme des Superabsorbers zum Zeitpunkt t und $Q_{max}$ die maximale Flüssigkeitsaufnahme des Superabsorbers ist. Die Auswertung kann nach Linearisierung der Gleichungen graphisch mittels einer Ausgleichsgeraden mit der Steigung -k bzw. -1/$\tau$ erfolgen oder mittels eines Computerprogramms aus einer Fit-Kurve der Meßdaten mit einer der vorstehenden Gleichungen.

Besonders bevorzugt ist die Berechnung der Flüssigkeitsaufnahme aus der Messlösung oder - dispersion nach dem Lambert-Beerschen-Gesetz. Dabei ist die Abschwächung der Intensität einer Strahlung bei dem Durchgang durch ein Medium mit einer absorbierenden Substanz von der Konzentration der absorbierenden Substanz und der Schichtdicke abhängig.

$$E_\lambda = \log_{10}\left(\frac{I_0}{I_1}\right) = \varepsilon_\lambda \cdot c \cdot d$$

wobei

$I_0$: die Intensität des einfallenden (eingestrahlten) Lichtes (Einheit: $W \cdot m^{-2}$)

$I_1$: die Intensität des transmittierten Lichtes (Einheit: $W \cdot m^{-2}$)

c: die Stoffmengenkonzentration der absorbierenden Substanz in der Flüssigkeit

$\varepsilon_\lambda$: der dekadische Extinktionskoeffizient bei gegebener Wellenlänge $\lambda$ (Dieser ist eine für die absorbierende Substanz spezifische Größe.)

d: die Schichtdicke des durchstrahlten, absorbierenden Körpers (Einheit: m)

Die Messung der Lichtabsorption bzw. der Abschwächung des durchgehenden Lichtstrahls durch Lichtstreuung erfolgt dabei durch eine Transmissionsmessung. Hierbei befindet sich die Meßlösung oder -dispersion zwischen Lichtquelle und Empfänger, und der Lichtstrahl geht auf geradem Weg hindurch: von der Lichtquelle zum Empfänger. Lichtquelle und Empfänger können sich dabei außerhalb des Meßgefäßes befinden oder in Form einer Eintauchsonde im Meßgefäß. Es ist auch möglich, daß nur die Lichtquelle oder der Empfänger sich außerhalb des Meßgefäßes befinden. Der optische Weg kann durch ganz- oder teildurchlässige Spiegel, Prismen oder Lichtleiter manipuliert werden, um die Meßgeometrie zu optimieren.

Zur Erfassung von Streulicht als zu korrigierender Störgrösse kann eine zusätzliche seitliche Beobachtung mittels eines unabhängigen Lichtempfängers durchgeführt werden. Seitlich bedeutet hier, daß der Lichtempfänger in einem Winkel von größer 0° und kleiner 180°, bevorzugt ca. 90° (= orthogonal) zur Durchlichtmeßstrecke angebracht ist. Es können auch mehrere Lichtempfänger zu diesem Zweck verwendet werden.

Im Fall der Verwendung einer Eintauchsonde kann diese mit einem Drahtsieb gegen das Hindurchschwimmen von quellenden Gelpartikeln geschützt werden oder die Messung kann im Überstand der Meßlösung ausgeführt werden. Dieses Vorgehen erspart das aufwändige Filtrieren der Meßlösung oder -dispersion und vereinfacht automatisierte Serienmessungen.

Bei der Kenngröße handelt es sich beispielsweise um die Zeit für die Quellung einer Schicht von Superabsorberpartikeln um einen bestimmten Wert. Derartige Kenngrößen werden in der EP 2 535 027 A1 auf den Seiten 13 bis 18 beschriebenen Testmethode "K(t) Test Method (Dynamic Effective Permeability and Uptake Kinetics Measurement Test Method)" als T5, T10 und T20 beschrieben.

Die Schicht enthält vorzugsweise von 0,1 bis 20 g Superabsorber, besonders bevorzugt von 0,2 bis 10 g Superabsorber, ganz besonders bevorzugt von 0,5 bis 5 g Superabsorber.

Die Schicht ist üblicherweise kreisrund und hat einen Durchmesser von vorzugsweise 3 bis 20 cm, besonders bevorzugt von 4 bis 10 cm, ganz besonders bevorzugt von 5 bis 7 cm.

Die Korrelation (Eichkurve) zwischen Kenngröße und Quellkonstante k bzw. charakteristischer Quellzeit τ wird ermittelt indem von mindestens drei Superabsorbern mit unterschiedlicher Permeabilität die Kenngröße gemessen und zusätzlich die Quellkonstante k bzw. die charakteristische Quellzeit τ ermittelt wird. Die Genauigkeit der Korrelation kann durch Erhöhung der gemessenen Anzahl an Superabsorbern unterschiedlicher Permeabilität erhöht werden. Die Auswertung kann graphisch mittels einer Ausgleichsgerade erfolgen oder mittels eines Computerprogramms.

Die Kenngröße der zur Erstellung der Korrelation verwendeten Superabsorber sollte einen Bereich von vorzugsweise ±10%, besonders bevorzugt ±25%, ganz besonders bevorzugt ±50%, vom Mittelwert abdecken. Die Superabsorber unterschiedlicher Permeabilität können durch Variation der Menge an Oberflächennachvernetzer bei der Oberflächennachvernetzung hergestellt werden und sollten im Übrigen möglichst große strukturelle Ähnlichkeiten aufweisen. Die Oberflächennachvernetzung wird beispielsweise in der Monographie "Modern Superabsorbent Polymer Technology", F.L. Buchholz und A.T. Graham, Wiley-VCH, 1998, Seiten 97 bis 101, beschrieben.

Der vorliegenden Erfindung liegt die Erkenntnis zugrunde, dass es einen Zusammenhang zwischen der Quellkonstante k bzw. der charakteristischen Quellzeit τ und von der Permeabilität abhängiger Kenngrößen gibt.

Die Permeabilität beschreibt die Durchlässigkeit gequollener Superabsorberschichten für wässrige Lösungen. Eine hohe Permeabilität der Superabsorber ist für Windeln mit einem hohen Anteil an Superabsorbern wichtig. Die Permeabilität kann beispielsweise als Flüssigkeitsweiterleitung (SFC) oder Gelbettpermeabilität (GBP) gemessen werden.

Die Quellung von Superabsorberschichten wird immer von der Permeabilität des verwendeten Superabsorber mit beeinflusst. Eine wenig permeable Superabsorberschicht behindert den Durchtritt von wässriger Lösung und damit die vollständige Quellung des Superabsorbers. Eine derartige Kenngröße ist beispielsweise die Flüssigkeitsaufnahme von 20 g/g (T20) gemäß der in der EP 2 535 027 A1 auf den Seiten 13 bis 18 beschriebenen Testmethode "K(t) Test Method (Dynamic Effective Permeability and Uptake Kinetics Measurement Test Method)".

Zur erfindungsgemäßen Messung der Quellkonstante k bzw. der charakteristischen Quellzeit τ werden die Superabsorberpartikel in überschüssiger wässriger Lösung dispergiert und keine Superabsorberschicht eingesetzt. Die Quellkonstante k bzw. die charakteristische Quellzeit τ scheinen damit unabhängig von der Permeabilität. Es ist überraschend, dass es trotzdem eine Korrelation zwischen Quellkonstante k bzw. charakteristischer Quellzeit τ und permeabilitätsabhängiger Kenngrößen gibt.

Um die Quellkonstante k bzw. die charakteristische Quellzeit τ reproduzierbar zu bestimmen sollte in Vorversuchen die geeignete Rührergeschwindigkeit sowie das optimale Verhältnis Meßlösung oder -dispersion zu Superabsorber ermittelt und während der Messungen konstant gehalten werden.

Um die Messung der Zentrifgenretentionskapazität (CRC) mit dem erfindungsgemäßen Verfahren durchzuführen, ist es nützlich mittels mindestens zwei bekannter Superabsorberproben eine Kalibrierkurve, typischerweise eine Kalibriergerade, zu erstellen, die dann für die Auswertung der weiteren Messungen verwendet werden kann.

Die einzelnen Schritte des Messverfahrens lassen sich leicht automatisieren. Weiterhin ermöglicht das Messverfahren die gleichzeitige Messung weiterer Kenngrößen des Superabsorbers mit einer einzigen Messung. Somit ermöglicht das erfindungsgemäße Verfahren eine kostengünstige Routineanalytik, insbesondere bei der kontinuierlichen Herstellung von Superabsorbern.

Ein weiterer Gegenstand der vorliegenden Erfindung ist die Verwendung des erfindungsgemäßen Verfahrens zur Qualitätskontrolle bei der kontinuierlichen Herstellung von Superabsorbern.

Methoden:

Die nachfolgend beschriebenen, mit "WSP" bezeichneten Standard-Testmethoden werden beschrieben in: "Standard Test Methods for the Nonwovens Industry", Ausgabe 2005, gemeinsam herausgegeben von den "Worldwide Strategic Partners" EDANA (Avenue Eugene Plasky, 157, 1030 Brüssel, Belgien, www.edana.org) und INDA (1100 Crescent Green, Suite 115, Cary, North Carolina 27518, USA, www.inda.org). Diese Veröffentlichung ist sowohl von EDANA als auch von INDA erhältlich.

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymerpartikel werden vor der Messung gut durchmischt.

Flüssigkeitsaufnahme von 20 g/g (T20)

Die Flüssigkeitsaufnahme von 20 g/g (T20) wird gemäß der in der EP 2 535 027 A1 auf den Seiten 13 bis 18 beschriebenen Testmethode "K(t) Test Method (Dynamic Effective Permeability and Uptake Kinetics Measurement Test Method)" bestimmt.

Zentrifugenretentionskapazität (Centrifuge Retention Capacity)

Die Zentrifugenretentionskapazität (CRC) wird gemäß der von der EDANA empfohlenen Testmethode Nr. WSP 241.2 (05) "Fluid Retention Capacity in Saline, After Centrifugation" bestimmt.

Beispiele

Für die Beispiele wurden vier Superabsorber unterschiedlicher Permeabilität hergestellt. Von den Superabsorbern wurden die Zentrifugenretentionskapazität (CRC) und die Flüssigkeitsaufnahme von 20 g/g (T20) gemessen. Die Ergebnisse sind in Tabelle 1 zusammengefasst:

Tab. 1: Eigenschaften der Superabsorber

|  | CRC [g] | T20 [s] |
|---|---|---|
| SAP1 | 25,5 | 110 |
| SAP2 | 26,6 | 134 |
| SAP3 | 26,2 | 170 |
| SAP4 | 26,1 | 200 |

Das zeitabhängige Quellverhalten der Superabsorber wurde gemessen. Dazu wurden 100 ml einer 0,9 gew.-%igen wässrigen Kochsalzlösung vorgelegt. Die vorgelegte Lösung enthielt zusätzlich als Komponente A 20 mg Dextranblau. Die Konzentration an Dextranblau in der Lösung wurde photometrisch gemessen. Zum Zeitpunkt t=0 wurden 0,75 g Superabsorber zugesetzt und die Messung gestartet. Aus den erhaltenen Daten wurde die charakteristische Quellzeit $\tau$ berechnet. Die Ergebnisse sind in Tabelle 2 zusammengefasst:

Tab. 2: charakteristische Quellzeit $\tau$

|  | $\tau$ [s] |
|---|---|
| SAP1 | 248 |
| SAP2 | 253 |
| SAP3 | 274 |
| SAP4 | 287 |

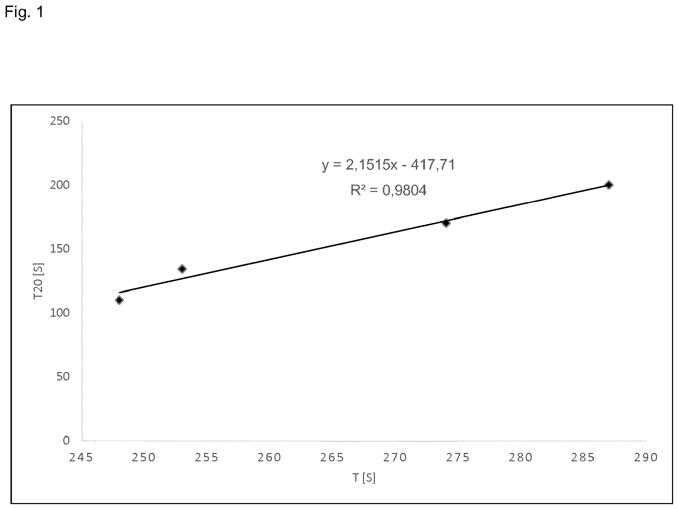

Damit ergibt sich die in Figur 1 dargestellte Korrelation (Eichkurve) für die Flüssigkeitsaufnahme von 20 g/g (T20)

Die folgende Tabelle 3 zeigt einen Vergleich der gemessenen Flüssigkeitsaufnahme von 20 g/g $(T20)_{gem}$ mit der über die Korrelation erhaltenen Flüssigkeitsaufnahme von 20 g/g $(T20)_{ber}$:

Tab. 3: Vergleich der gemessenen Flüssigkeitsaufnahme von 20 g/g $(T20)_{gem}$ mit der über die Korrelation erhaltenen Flüssigkeitsaufnahme von 20 g/g $(T20)_{ber}$

|  | $(T20)_{gem}$ [s] | $(T20)_{ber}$ [s] |
|---|---|---|
| SAP1 | 110 | 116 |
| SAP2 | 134 | 127 |
| SAP3 | 170 | 172 |
| SAP4 | 200 | 199 |

Die Tabelle zeigt, dass die Abweichung weniger als 6% beträgt und damit im Fehlerbereich der eigentlichen Messung ist.

Zusätzlich wurde über die Flüssigkeitsaufnahme nach 0,5 Stunden die Zentrifugenretentionskapazität $(CRC)_{ber}$ berechnet und mit der gemessenen Zentrifugenretentionskapazität $(CRC)_{gem}$ verglichen:

Tab. 4: Vergleich der gemessenen Zentrifugenretentionskapazität $(CRC)_{gem}$ mit der über das zeitabhängige Quellverhalten erhaltenen Zentrifugenretentionskapazität $(CRC)_{ber}$

|  | $(CRC)gem$ [g/g] | $(CRC)_{ber}$ [g/g] |
|---|---|---|
| SAP1 | 25,5 | 25,5 |
| SAP2 | 26,6 | 25,9 |
| SAP3 | 26,2 | 26,3 |
| SAP4 | 26,1 | 25,8 |

Die Tabelle zeigt, dass die Abweichung weniger als 3% beträgt und damit im Fehlerbereich der eigentlichen Messung ist.

## Patentansprüche

1. Verfahren zur Messung von Kenngrößen bei Superabsorbern, wobei überschüssige wässrige Lösung oder Dispersion vorgelegt wird, der Superabsorber in der vorgelegten wässrigen Lösung oder Dispersion unter Rühren gequollen wird, in der wässrigen Lösung oder Dispersion mindestens eine Komponente A gelöst oder dispergiert ist und die Anreicherung der mindestens einen Komponente A in der wässrigen Lösung oder Dispersion während des Quellens des Superabsorbers gemessen wird, **dadurch gekennzeichnet, dass** über die Anreicherung der Komponente A in der wässrigen Lösung oder Dispersion das zeitabhängige Quellverhalten gemessen und daraus die Quellkonstante k oder die charakteristische Quellzeit $\tau$ berechnet wird, die Kenngröße von der Permeabilität des Superabsorbers abhängt und die Kenngröße mittels einer vorher gemessenen Korrelation zwischen Quellkonstante k und Kenngröße oder charakteristischer Quellzeit $\tau$ und Kenngröße ermittelt wird.

2. Verfahren nach Anspruch 1, **dadurch gekennzeichnet, dass** die Komponente A ein lösliches Salz ist und die Anreicherung der Komponente A über den Anstieg der elektrischen Leitfähigkeit der Lösung gemessen wird.

3. Verfahren nach Anspruch 1, **dadurch gekennzeichnet, dass** die Komponente A ein löslicher Farbstoff ist und die Anreicherung der Komponente A über den Anstieg der Lichtabsorption der Lösung gemessen wird.

4. Verfahren nach einem der Ansprüche 1 bis 3, **dadurch gekennzeichnet, dass** die Menge an eingesetzter wässriger Lösung oder Dispersion von 10 bis 200 ml beträgt.

5. Verfahren nach einem der Ansprüche 1 bis 4, **dadurch gekennzeichnet, dass** die Menge an eingesetztem Superabsorber von 0,5 bis 5 g beträgt.

6. Verfahren nach einem der Ansprüche 1 bis 5, **dadurch gekennzeichnet, dass** der Quotient aus Menge an eingesetzter wässriger Lösung oder Dispersion und Gesamtquellvermögens des eingesetzten Superabsorbers in der wässrigen Lösung oder Dispersion im Bereich von 2,5 bis 5 liegt.

7. Verfahren nach einem der Ansprüche 1 bis 6, **dadurch gekennzeichnet, dass** die Kenngröße die Zeit für die Quellung einer Schicht von Superabsorberpartikeln um einen bestimmten Wert ist.

8. Verfahren nach Anspruch 7, **dadurch gekennzeichnet, dass** die Schicht von Superabsorbern aus 0,5 bis 5 g Superabsorber besteht und eine kreisrunde Fläche mit einem Durchmesser von 5 bis 7 cm belegt.

9. Verfahren nach einem der Ansprüche 1 bis 8, **dadurch gekennzeichnet, dass** die Korrelation durch Berechnung der Quellkonstante k oder der charakteristischen Quellzeit $\tau$ und Messung der Kenngröße von mindestens drei Superabsorbern mit unterschiedlicher Permeabilität gemessen wird.

10. Verfahren nach Anspruch 9, **dadurch gekennzeichnet, dass** die Superabsorber unterschiedlicher Permeabilität durch Änderung der Menge an Vernetzer bei der Polymerisation und/oder durch Änderung der Menge an Oberflächennachvernetzer bei einer Oberflächennachvernetzung hergestellt werden.

11. Verfahren nach einem der Ansprüche 1 bis 10, **dadurch gekennzeichnet, dass** der Superabsorber eine mittlere Partikelgröße von 200 bis 600 $\mu$m aufweist.

12. Verfahren nach einem der Ansprüche 1 bis 11, **dadurch gekennzeichnet, dass** der Superabsorber eine Flüssigkeitsweiterleitung von mindestens $10 \times 10^{-7}$ cm$^3$s/g aufweist.

13. Verfahren nach einem der Ansprüche 1 bis 12, **dadurch gekennzeichnet, dass** der Superabsorber eine Zentrifugenretentionskapazität von mindestens 10 g/g aufweist.

14. Verwendung des Verfahren nach einem der Ansprüche 1 bis 13 zur Qualitätskontrolle bei der kontinuierlichen Herstellung von Superabsorbern.

## Claims

1. A method of measuring indices in superabsorbents, by initially charging excess aqueous solution or dispersion, swelling the superabsorbent in the initially charged aqueous solution or dispersion while stirring, dissolving or dispersing at least one component A in the aqueous solution or dispersion and measuring the enrichment of the at least one component A in the aqueous solution or dispersion during the swelling of the superabsorbent, wherein the enrichment of component A in the aqueous solution or dispersion is used to measure the time-dependent swelling characteristics and these are used to calculate the swelling constant k or the characteristic swell time $\tau$, the index is dependent on the permeability of the superabsorbent, and the index is ascertained by means of a correlation measured beforehand between swelling constant k and index or characteristic swell time τ and index.

2. The method according to claim 1, wherein component A is a soluble salt and the enrichment of component A is measured via the rise in electrical conductivity of the solution.

3. The method according to claim 1, wherein component A is a soluble dye and the enrichment of component A is measured via the rise in light absorption of the solution.

4. The method according to any of claims 1 to 3, wherein the amount of aqueous solution or dispersion used is from 10 to 200 ml.

5. The method according to any of claims 1 to 4, wherein the amount of superabsorbent used is from 0.5 to 5 g.

6. The method according to any of claims 1 to 5, wherein the quotient of amount of aqueous solution or dispersion used and total swelling capacity of the superabsorbent used in the aqueous solution or dispersion is in the range from 2.5 to 5.

7. The method according to any of claims 1 to 6, wherein the index is the time taken for a layer of superabsorbent particles to swell by a particular value.

8. The method according to claim 7, wherein the layer of superabsorbents consists of 0.5 to 5 g of superabsorbent and covers a circular area having a diameter of 5 to 7 cm.

9. The method according to any of claims 1 to 8, wherein the correlation is measured by calculating the swelling constant k or the characteristic swell time τ and measuring the index of at least three superabsorbents having different permeability.

10. The method according to claim 9, wherein the superabsorbents of different permeability are produced by changing the amount of crosslinker in the polymerization and/or by changing the amount of surface postcrosslinker in a surface postcrosslinking operation.

11. The method according to any of claims 1 to 10, wherein the superabsorbent has an average particle size of 200 to 600 μm.

12. The method according to any of claims 1 to 11, wherein the superabsorbent has a saline flow conductivity of at least $10 \times 10^{-7}$ cm$^3$s/g.

13. The method according to any of claims 1 to 12, wherein the superabsorbent has a centrifuge retention capacity of at least 10 g/g.

14. The use of the method according to any of claims 1 to 13 for quality control in the continuous production of superabsorbents.

## Revendications

1. Procédé de mesure de caractéristiques pour des superabsorbants, dans lequel une solution ou dispersion aqueuse en excès est chargée, le superabsorbant est gonflé sous agitation dans la solution ou dispersion aqueuse chargée, au moins un composant A est dissous ou dispersé dans la solution ou dispersion aqueuse et l'enrichissement de l'au moins un composant A dans la solution ou dispersion aqueuse est mesuré pendant le gonflement du superabsorbant, **caractérisé en ce que** le comportement de gonflement en fonction du temps est mesuré par le biais de l'enrichissement du composant A dans la solution ou dispersion aqueuse et la constante de gonflement k ou le temps de gonflement caractéristique τ est calculé(e) à partir de celui-ci, la caractéristique dépend de la perméabilité du superabsorbant et la caractéristique est déterminée au moyen d'une corrélation mesurée précédemment entre la constante de gonflement k et la caractéristique ou le temps de gonflement caractéristique τ et la caractéristique.

2. Procédé selon la revendication 1, **caractérisé en ce que** le composant A est un sel soluble et l'enrichissement du composant A est mesuré par le biais de l'augmentation de la conductivité électrique de la solution.

3. Procédé selon la revendication 1, **caractérisé en ce que** le composant A est un colorant soluble et l'enrichissement du composant A est mesuré par le biais de l'augmentation de l'absorption de lumière de la solution.

4. Procédé selon l'une quelconque des revendications 1 à 3, **caractérisé en ce que** la quantité de solution ou dispersion aqueuse utilisée est de 10 à 200 ml.

5. Procédé selon l'une quelconque des revendications 1 à 4, **caractérisé en ce que** la quantité de superabsorbant utilisée est de 0,5 à 5 g.

6. Procédé selon l'une quelconque des revendications 1 à 5, **caractérisé en ce que** le quotient de la quantité de solution ou dispersion aqueuse utilisée et du pouvoir de gonflement total du superabsorbant utilisé dans la solution ou dispersion aqueuse se situe dans la plage de 2,5 à 5.

7. Procédé selon l'une quelconque des revendications 1 à 6, **caractérisé en ce que** la caractéristique est une valeur déterminée du temps de gonflement d'une couche de particules de superabsorbant.

8. Procédé selon la revendication 7, **caractérisé en ce que** la couche de superabsorbants est constituée de 0,5 à 5 g de superabsorbant et occupe une surface arrondie dotée d'un diamètre de 5 à 7 cm.

9. Procédé selon l'une quelconque des revendications 1 à 8, **caractérisé en ce que** la corrélation est mesurée par calcul de la constante de gonflement k ou du temps de gonflement caractéristique τ et par mesure de la caractéristique d'au moins trois superabsorbants dotés d'une perméabilité différente.

10. Procédé selon la revendication 9, **caractérisé en ce que** les superabsorbants de perméabilité différente sont préparés par modification de la quantité d'agent de réticulation lors de la polymérisation et/ou par modification de la quantité d'agent de post-réticulation de surface lors d'une post-réticulation de surface.

11. Procédé selon l'une quelconque des revendications 1 à 10, **caractérisé en ce que** le superabsorbant présente une taille moyenne de particule de 200 à 600 $\mu$m.

12. Procédé selon l'une quelconque des revendications 1 à 11, **caractérisé en ce que** le superabsorbant présente un transfert de liquide d'au moins $10 \times 10^{-7}$ cm$^3$s/g.

13. Procédé selon l'une quelconque des revendications 1 à 12, **caractérisé en ce que** le superabsorbant présente une capacité de rétention centrifuge d'au moins 10 g/g.

14. Utilisation du procédé selon l'une quelconque des revendications 1 à 13 pour le contrôle qualité lors de la préparation en continu de superabsorbants.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3831272 A1

- EP 2535027 A1

**In der Beschreibung aufgeführte Nicht-Patentliteratur**

- Die Herstellung von Superabsorbern wird in der Monographie. **F.L. BUCHHOLZ ; A.T. GRAHAM.** Modern Superabsorbent Polymer Technology. Wiley-VCH, 1998, 71-103
- *ChemKon (Chemie konkret),* 2013, vol. 20, 127-130

- *Polymer Testing,* 2017, vol. 62, 110-114
- **F.L. BUCHHOLZ ; A.T. GRAHAM.** Modern Superabsorbent Polymer Technology. Wiley-VCH, 1998, 97-101